# EUROPÄISCHE PATENTSCHRIFT

(11) **EP 2 036 152 B1**
(45) Veröffentlichungstag und Bekanntmachung des Hinweises auf die Patenterteilung: **28.12.2011**
(21) Anmeldenummer: 07785565.8
(22) Anmeldetag: 26.06.2007
(51) Int. Cl.: H01M 4/86, H01M 4/88, H01M 4/90, H01M 8/02, H01M 8/12

(54) **KERAMISCHE WERKSTOFFKOMBINATION FÜR EINE ANODE FÜR EINE HOCHTEMPERATUR-BRENNSTOFFZELLE**
CERAMIC MATERIAL COMBINATION FOR AN ANODE OF A HIGH-TEMPERATURE FUEL CELL
MATÉRIAU COMPOSITE CÉRAMIQUE DESTINÉ À UNE ANODE D'UNE PILE À COMBUSTIBLE HAUTE TEMPÉRATURE

(30) Priorität: 01.07.2006 DE 102006030393
(43) Veröffentlichungstag der Anmeldung: 18.03.2009
(73) Patentinhaber: Forschungszentrum Jülich GmbH, 52425 Jülich (DE)
(72) Erfinder: FU, Qingxi, 76227 Karlsruhe (DE); TIETZ, Frank, 52428 Jülich (DE); BUCHKREMER, Hans-Peter, 52525 Heinsberg (DE); STÖVER, Detlev, 52382 Niederzier (DE)
(86) Internationale Anmeldenummer: PCT/DE2007/001132
(87) Internationale Veröffentlichungsnummer: WO 2008/003288

(56) Entgegenhaltungen:
- WO-A-03/041196
- WO-A-03/075383
- US-A1- 2004 185 327
- US-A1- 2004 265 669
- S. KOUTCHEIKO, Y. YOO, A. PETRIC, I. DAVISON: "Effect of ceria on properties of yttrium-doped strontium titanate ceramics" CERAMICS INTERNATIONAL, Bd. 32, 5. März 2005 (2005-03-05), Seiten 67-72, XP002452688 on-line
- S. HUI, A. PETRIC: "Evaluation of yttrium-doped SrTiO3 as an anode for solid oxide fuel cells" JOURNAL OF THE EUROPEAN CERANIC SOCIETY, Bd. 22, 2002, Seiten 1673-1681, XP002452689

## Beschreibung

Die Erfindung betrifft ein Anodenmaterial für den Einsatz in elektrochemischen Festelektrolytzellen, insbesondere als Anodensubstrat in anodengestützten Hochtemperatur-Brennstoffzellen.

### Stand der Technik

Anodenmaterialien werden eingesetzt in elektrochemischen Zellen, insbesondere in Festelektrolyt-Brennstoffzellen sowie in Elektrolysezellen mit Arbeitstemperaturen von 500 bis 950 °C. Die Materialien, die beim Aufbau solcher Zellen Verwendung finden, müssen mehreren Anforderungen genügen, um als Anode eingesetzt werden zu können. Einerseits müssen sie sehr gute katalytische Eigenschaften für den elektrochemischen Umsatz der Gase an den Elektroden aufweisen, den Transport des elektrischen Stromes und des ionischen Stromes gewährleisten und gleichzeitig eine ausreichende Stabilität über viele Temperaturzyklen und über lange Zeiten aufweisen.

Aus der Literatur sind verschiedene Materialkompositionen, Technologien und Konstruktionen für den Aufbau von Hochtemperatur-Brennstoffzellen im Labor- und Technikumsmaßstab bekannt. In den vorgenannten elektrochemischen Zellen übernimmt die Anode die Aufgabe der elektrochemischen Umsetzung des Brenngases (Wasserstoff, Methan oder Kohlenwasserstoffe mit längeren Ketten) zu Kohlendioxid, Wasser und Elektronen, die als elektrische Energie nutzbar sind. Dabei werden die von dem Elektrolytmaterial antransportierten Sauerstoffionen auf einer Katalysatoroberfläche mit dem Brenngas in Reaktion gebracht, wobei die gasförmigen Produkte über die vorhandene Porosität des Werkstoffs und die Elektronen über eine elektrisch leitfähige Phase abtransportiert werden. Damit sowohl Elektronen-, Ionen- und Gastransport ausreichend gewährleistet wird, werden Gefüge mit einer Porosität von 20 - 50 % und Materialien mit hoher elektrischer und ionischer Leitfähigkeit eingesetzt.

Die meisten heute eingesetzten Anoden bestehen daher aus einem Nickel/Ionenleiter-Verbund, wobei als Ionenleiter in der Regel mit Yttriumoxid oder Scandiumoxid voll- oder teilstabilisiertes Zirkoniumoxid (YSZ bzw. ScSZ) oder lanthanoidhaltige (z. B. Y, Sm, Gd oder andere) Ceroxide (abgekürzt als CYO, CSO bzw. CGO) verwendet wird.

Ein Ni/YSZ-Komposit mit typischerweise 40 Vol.-% Porosität, 24 Vol.-% Ni und 36 Vol.-% YSZ besitzt als Anode etwa folgende Eigenschaften:
Elektrische Leitfähigkeit (bei 800 °C): 100 - 400 S/cm
(reines Nickel: 23000 S/cm)
Ionische Leitfähigkeit (bei 800 °C): ca. 0,001 - 0,006 S/cm
(reines YSZ mit 8 mol% Y₂O₃: 0,056 S/cm
Thermischer Ausdehnungskoeffizient: 12-13 x 10⁻⁶ K⁻¹
Das Nickel übernimmt bei diesen "Cermets" sowohl die Funktion des elektrischen Leiters als auch die des Katalysators.

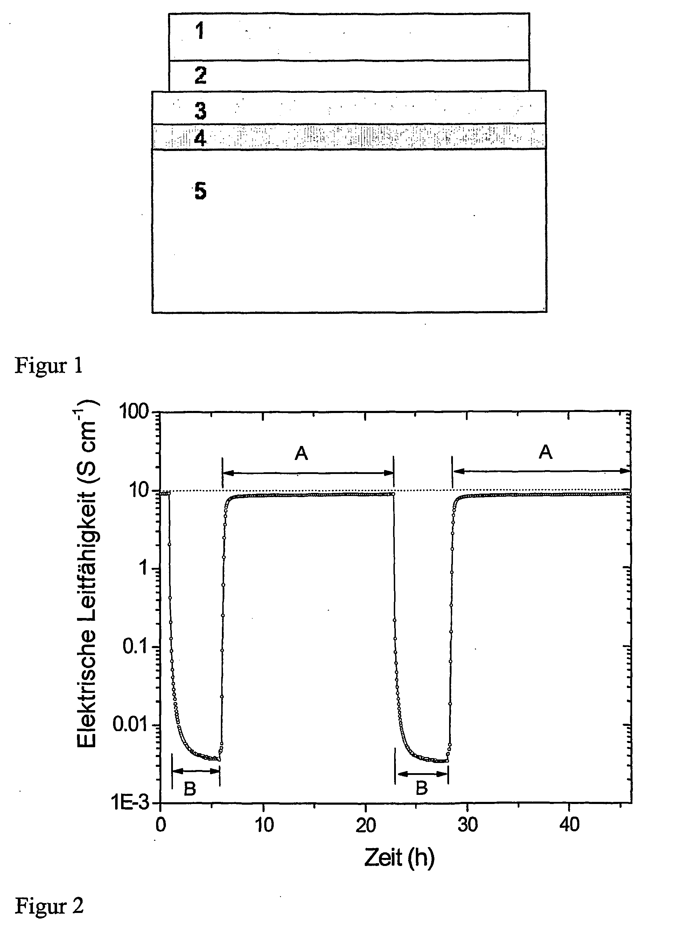

Die Ausgestaltung der Brennstoffzelle kann dahingehend variieren, dass entweder nur eine Anode auf einem dicken Elektrolytsubstrat aufgebracht wird oder die Anode selbst als Substrat verwendet wird. Üblicherweise wird dann zur Verbesserung der elektrochemischen Aktivität eine zusätzliche Anodenschicht, auch Anodenfunktionsschicht genannt, eingesetzt, die eine optimierte Mikrostruktur besitzt (siehe Abbildung 1). Der Elektrolyt besitzt dann nur noch eine Dicke von 5 - 50 µm und durch die verminderte Dicke wird auch der Ohmsche Widerstand der Brennstoffzelle reduziert, was die vorteilhafte Verwendung von solchen anodengestützten Brennstoffzellen bei niedrigeren Temperaturen von 600 - 800 °C möglich macht.

Ein wesentlicher Nachteil der anodengestützten Brennstoffzellen ist jedoch die mechanische Instabilität des Anodensubstrates, wenn es während oder nach Betrieb wieder einer oxidierenden Atmosphäre ausgesetzt ist. Die Reoxidation des metallischen Nickels zu Nickeloxid ist mit einer starken Volumenzunahme verbunden, die zu Rissen im Anodensubstrat und auch in der dünnen Elektrolytschicht führt. Für den Einsatz von Brennstoffzellen mit Ni/YSZ-Anoden muss daher ein Einbruch von Luft in den Anodenraum ausgeschlossen werden.

Für die Entwicklung von reoxidationsstabilen Anoden wurde bislang eine Reihe von Vorschlägen gemacht, die jedoch für Anodensubstrate regelmäßig nicht zufrieden stellend sind. Neben den oben genannten physikalischen Eigenschaften, die angestrebt werden sollten, muss für ein Anodensubstrat überdies auch eine sehr enge mechanische Randbedingung erfüllt sein, die die Rissbildung im Elektrolyten vermeidet. Ein Anodensubstrat sollte bei einem Gaswechsel von oxidierenden zu reduzierenden Bedingungen oder umgekehrt nicht mehr als 0,05 % seiner Kantenlänge ändern (entsprechend 50 µm bei einer 100 x 100 mm² großen Zelle). Im Idealfall sollte keine Änderung der Größe messbar sein.

Dies ist insofern schwer zu realisieren, weil bei einem Gaswechsel von oxidierenden zu reduzierenden Bedingungen oder umgekehrt viele Übergangsmetallkationen ihren Valenzzustand ändern und eine Änderung der Kristallgitterparameter nach sich zieht.

Beispielsweise sind substituierte Cerdioxide in einer Brenngasatmosphäre, d. h. bei Sauerstoffpartialdrücken von 10⁻¹⁵ > p(O₂) > 10⁻²², nicht vollständig stabil. Die Ce⁴⁺-Ionen im Kristallgitter werden zum Teil zu Ce³⁺-Ionen reduziert, was zwei Eigenschaftsänderungen nach sich zieht. Zum einen führt die Reduktionsreaktion zur Bildung freier Elektronen und damit zu einer höheren elektronischen Leitfähigkeit. Andererseits ist die Reduktion der Cer-Ionen mit einer deutlichen Volumenexpansion verbunden. Der Ionenradius von Ce⁴⁺-Ionen beträgt 9,7 pm, der von Ce3⁺-Ionen 11,43 pm [1] wie aus A. Tsoga, A. Gupta, A. Naoumidis, P. Nikolopoulos, Acta Mater. 48 (2000) 4709 bekannt ist. Ein Material wie Ce₀.₈Gd_{0.2}O_{1.9} expandiert in einer Atmosphäre aus Ar/4% H₂/3% H₂O und bei 800 °C um 0,17 % und ist als Anodensubstrat daher regelmäßig nicht geeignet. Diese Tendenz zur Längen- oder Volumenexpansion kann auch bei Perowskiten wie LaCrO₃, LaMnO₃ oder LaFeO₃ beobachtet werden, wobei auch in diesem Fall eine Reduktionsreaktion von (Cr, Mn, Fe)⁴⁺ auf (Cr, Mn, Fe)³⁺ vorliegt.

In der Literatur werden oft reine keramische Anoden als reoxidationsstabil beschrieben. In einigen Fällen erfüllen sie dennoch nicht das Kriterium der vernachlässigbar kleinen Längenänderung und sind für den Einsatz als Anodensubstrate ungeeignet. Zudem sind rein keramische Anoden oftmals nicht ausreichend katalytisch aktiv, was sie als Anode bei Betriebstemperaturen von 600 - 800 °C nicht geeignet erscheinen lässt und sie daher nur für elektrolytgestützte Brennstoffzellen und Betriebstemperaturen > 800°C zu verwenden sind.

Einige der aus der Literatur bekannten Lösungsvorschläge sind nachfolgend aufgeführt.

Die US Patentanmeldung 2003/0165726 A1 beschreibt die Modifizierung einer Ni/YSZ-Anode mit dem Ziel einer verbesserten Redox-Stabilität, indem das Gefüge durch kleine und große Poren so verändert wird, dass bei der Oxidation des Nickels keine Schädigungen des Gefüges auftreten sollen. Für die Herstellung des keramischen Netzwerks aus YSZ, Al₂O₃, TiO₂, dotiertem CeO₂, MgO oder Spinellen werden diese zusammen mit einem Metalloxid als feines Pulver zusammen mit einem Porenbildner und einer Flüssigkeit zu einer Paste vermischt. Dies wird als Schicht aufgetragen und gesintert. Es bildet sich ein zweiteiliges Netzwerk mit Makro und Mikroporen aus, wobei das erste Netzwerk das Elektrodenmaterial umfasst, während das zweite Netzwerk Metalle aufweist. Dieser Vorschlag ist für die Realisierung eines analogen Anodensubstrates jedoch wenig geeignet, da die großen Poren dazu führen, dass dünne Anoden- und Elektrolytschichten, und insbesondere die Anodenfunktionsschicht nicht als dichte Schichten aufgebracht werden können.

Die US Patentanmeldung 2004/0001994 A1 enthält die Beschreibung von Anoden auf der Basis von Cer-modifizierten Strontiumtitanat-Anoden (ggf. mit Gehalten von La, Sc oder Y für Sr und ggf. Gehalten von Ni, Co, Cu, Cr oder Fe für Ti). Die Erfinder erwägen neben der Verwendung dieser Anoden in elektrolytgestützten Zellen auch den Einsatz als Anode in anodengestützten Zellen (Absatz [0066]). Dagegen spricht jedoch die Tatsache, dass Cerhaltige Materialien mit YSZ als Elektrolyt schlecht leitende Mischphasen bilden, wie es in A. Tsoga, A. Gupta, A. Naoumidis, P. Nikolopoulos, Acta Mater. 48 (2000) p. 4709, veröfffentlicht ist, und die Leistung einer Brennstoffzelle stark beeinträchtigen. Für den Einsatz der offenbarten Anodenzusammensetzungen ist die Präsenz von Cer jedoch notwendig, um eine katalytische Aktivität zu gewährleisten.

Die Anoden ließen sich besser mit einem Cerdioxid basierten Elektrolyten einsetzen, um die schlecht leitenden Mischphasen zu vermeiden. Dies ist jedoch nur bei Betriebstemperaturen < 600 °C möglich, da sonst die Cerdioxidschicht teilweise reduziert wird und zur Rissbildung neigt. Die offenbarten geringen Zellleistungen bei Temperaturen < 800 °C lassen aber einen Einsatz auch bei dieser Variation wenig aussichtsreich erscheinen.

In Absatz [0094] von A. Tsoga, A. Gupta, A. Naoumidis, P. Nikolopoulos, Acta Mater. 48 (2000) p. 4709, wird auf die Dimensionsstabilität solcher Cer-modifizierten Strontiumtitanat-Anoden näher eingegangen und festgestellt, dass eine Änderung bis zu 0,1 % akzeptabel für eine SOFC-Anode sei. Dies ist möglicherweise für elektrolytgestützte Zellen zutreffend, für anodengestützte Zellen ist dieser Grenzwert jedoch zu hoch.

Aus der US 2003/0165726 A1 wird ersichtlich, dass gröbere Pulver zu deutlich schlechteren Zellleistungen auf Grund höherer Polarisationswiderstände führen (dort Figur 22). Die dort in Tabelle 1 angegebenen Werte für Polarisationswiderstände verschiedener Zusammensetzungen wurden nach einer Sinterung der Anoden bei 1000 °C erzielt. Da höhere Sintertemperaturen immer auch mit einer Vergröberung der Pulverpartikel einhergehen, kann daraus geschlossen werden, dass wesentlich schlechtere Leistungen erwartet werden können, wenn die Anoden bei 1350 - 1500 °C gesintert werden, wie dies für Anodensubstrate üblich ist. Die Verwendung von Cer-modifizierten Strontiumtitanat-Anoden in anodengestützten Zellen ist daher wohl mit niedrigen Cer-Gehalten möglich, wird aber mit großer Wahrscheinlichkeit keine dem Stand der Technik vergleichbar guten Leistungsdichten der Zellen erbringen.

In der Patentanmeldung US 2005/0250000 A1 werden die Ansprüche der vorhergehenden Patentanmeldung auf Cerdioxide mit Anteilen an Nb, V, Sb und Ta ausgeweitet, die zuvor gemachten Nachteile bei der Verwendung als Anodensubstrat bleiben jedoch bestehen.

In der Patentanmeldung US 2004/0081893 A1 wird ein Stoffsystem beschrieben, welches eine bei einem Gaswechsel von oxidierenden zu reduzierenden Bedingungen ausdehnende und eine schrumpfende Komponente umfasst. Dies führt dazu, dass die Größe von Bauteilen insgesamt unverändert bleibt (Dimensionsstabilität). Die ausdehnende Komponente sind Perowskite aus (La, Ca, Sr)(Cr, Fe)O₃ und die schrumpfende Komponente enthält Vanadiumoxid, wird jedoch nicht näher spezifiziert. Diese Materialkombination zeigt, dass man durch Einsatz mehrerer Komponenten eine Dimensionsstabilität erzielen kann. Es ist jedoch für die Verwendung als Anode oder Anodensubstrat ungeeignet, da es weder katalytisch aktiv ist, noch eine nennenswerte Ionenleitfähigkeit besitzt. In den Absätzen [0109] ff. wird auch auf die Verwendung von Cerdioxiden eingegangen und die Beschreibungen entsprechen denen der vorhergehenden Patentanmeldungen mit den dort entsprechend geschilderten Nachteilen.

Eine redox stabile NiIYSZ-Anode wird in US 2004/0121222 A1 durch Imprägnierung von Ni oder NiO in ein YSZ-Gerüst erreicht. Um eine elektrische Stromleitung zu gewährleisten, muss der Ni-Gehalt 10 - 30 % betragen. Ein solcher Ni-Gehalt auf der Oberfläche eines keramischen Gerüstes führt zu einer hohen Belegung der keramischen Oberfläche. Dies führt einerseits zu einer Reduzierung der katalytisch aktiven Zentren (Dreiphasen-Grenzen von Ni, YSZ und Poren) und andererseits, durch den engen Kontakt der Ni-Partikel, zu einer Agglomeration des Ni während des Betriebes der Zelle und damit zu einem sukzessiven Verlust der elektrischen Leitfähigkeit. Die Infiltration mit solchen Gehalten an Ni erscheint nachteilig im Hinblick auf die Langzeitstabilität solcher Anodensubstrate.

Aus WO 03/041196 A ist eine Anode für eine Festoxid-Brennstoffzelle bekannt, die eine elektrisch leitende Phase, eine ionisch leitende Phase sowie einen metallischen Katalysator aufweist. Beispielhaft wird dort eine Anode mit der Zusammensetzung 47,5 Gew.-% (Sr_{0,86}Y_{0,08})TiO₃, 47,5 Gew.-% GDC (Gadolinium dotiertes Ceroxid) und 0,5 Gew.-% NiO beschrieben.

Ferner ist aus US 2004/185327 A1 eine Anode für eine Festoxid-Brennstoffzelle bekannt, die ein poröses keramisches Material und ein zusätzliches keramisches Material umfasst. Diese Anode beinhaltet YSZ oder mit Scandium dotiertes ZrO₂ als poröses Material, welches mit Yttrium dotiertem SrTiO₃ imprägniert ist.

### Aufgabe und Lösung

Aufgabe der Erfindung ist es, einen vorteilhaften Werkstoff für den Einsatz in Bauteilen mit einem Festelektrolyt bereitzustellen, der einerseits nur sehr geringe Änderungen der äußeren Maße bei Variation der umgebenden Atmosphäre aufweist und andererseits eine dem Stand der Technik entsprechend gute elektrochemische Wirkung beim Einsatz in einer Brennstoffzelle besitzt. Zudem darf diese Materialkombination keine chemische Wechselwirkung mit konventionellen Elektrolytwerkstoffen besitzen. Insbesondere soll ein Anodensubstrat zur Verfügung gestellt werden, welches bei ungewolltem oder betriebsbedingtem Gaswechsel von oxidierenden zu reduzierenden Bedingungen oder umgekehrt für eine daraus aufgebaute Anode nicht schädlich ist.

Eine weitere Aufgabe der Erfindung ist, ein Verfahren zur Herstellung eines solchen Werkstoffes bzw. einer Anode zur Verfügung zu stellen.

Die Aufgaben werden gelöst durch ein Anodensubstrat gemäß Hauptanspruch sowie einer Verwendung und Verfahren zur Herstellung dieses Substrates gemäß den Nebenansprüchen. Vorteilhafte Ausgestaltungen des Anodensubstrates sowie der Verwendung und des Herstellungsverfahrens finden sich in den jeweils darauf rückbezogenen Ansprüchen.

### Gegenstand der Erfindung

Die erfinderische keramische Anode besteht aus einem Komposit, welches eine elektronisch leitende und eine ionisch leitende Phase enthält. Das Komposit liegt als ein mechanisches, netzartiges poröses keramisches Grundgerüst vor, welches sowohl den elektronischen als auch den ionischen Transport gewährleistet. Ferner umfasst die Anode einen kleinen Anteil eines metallischen Katalysators, der fein verteilt in den Poren auf der Oberfläche des keramischen Gerüstes angeordnet ist. Das keramische Grundgerüst umfasst zwei keramische Oxide, eines mit vorwiegend elektronischer Leitfähigkeit, das andere mit vorwiegend ionischer Leitfähigkeit unter anodischen Bedingungen. Die beiden keramischen Oxide liegen als separate Phasen vor, die im Idealfall jeweils ein eigenständiges, durchgehendes Netzwerk ausbilden. Die Porosität der Anode beträgt zwischen 15 und 500 Vol.-%.

Diese zwei Keramiken zeigen vorteilhaft bei dem Wechsel der Gasatmosphäre eine gegenläufige Tendenz in ihren Ausdehnungsverhalten, so dass die einzelnen Längenänderungen des Verbundes praktisch kompensiert werden. Zusätzliche Katalysatorpartikel können sich fein verteilt auf der Keramikoberfläche im Inneren der Poren befinden und haben aufgrund der geringen Beladung regelmäßig keinen Einfluss auf die Leitfähigkeit.

Bei der elektronisch leitenden Phase der erfindungsgemäßen Anode handelt es sich um ein lanthanoid-substituiertes Strontiumtitanat der allgemeinen Formel Sr₁₋ₓLnₓTiO₃ mit Ln = Y, Gd-Lu und 0,03 < x < 0,2. Diese Phase weist besonders gute elektrische Leitfähigkeiten in Kombination mit einer nur geringen Längenänderung bei Wechsel der Atmosphäre auf Als besonders geeignete Verbindung hat sich Sr₁₋ₓYₓTiO₃ mit 0,07 < x < 0,1 (SYT) herausgestellt.

Die elektrische Leitfähigkeit von SYT nach Reduktion bei hohen Temperaturen z. B. oberhalb von > 1300 °C beträgt 20 - 100 S/cm bei 800 °C in anodischer Atmosphäre. Im Gegensatz zu anderen Oxiden mit Cr, Mn und anderen Übergangsmetallkationen tritt bei SYT eine Ausdehnung nicht bei der Reduktion, sondern bei der Oxidation des Materials auf

Als vorwiegend ionisch leitende Phase wird insbesondere eine Keramik in Form des Y₂O₃- oder Sc₂O₃-stabilisierten Zirkoniumdioxids (YSZ oder ScSZ) eingesetzt.

Ein Gemisch aus SYT und YSZ (65:35 Vol.-%) zeigt eine redox-stabile Leitfähigkeit von ca. 10 S/cm unter anodischen Bedingungen. Dieser Wert ist zwar eine Größenordnung kleiner als für ein Ni/YSZ-Cermet, liefert aber keinen wesentlichen Beitrag zum Gesamtwiderstand einer Brennstoffzelle. Als flächenspezifischer Widerstand ergibt sich mit dieser Materialkombination ein Wert von etwa 15 mΩ cm² für ein 1,5 mm dickes Anodensubstrat. YSZ unterliegt regelmäßig keiner Längenänderung bei Wechsel von oxidierenden zu reduzierenden Bedingungen.

Eine noch bessere Reduzierung der resultierenden Längenänderung des Komposits kann erreicht werden, wenn als Ionenleiter CGO verwendet wird, der ein gegenläufiges Verhalten bei einem Gaswechsel aufweist, also bei Reduktion eine Ausdehnung erfährt. Dies kann im Prinzip zu einem Komposit (Verbund) führen, der keinerlei Längenänderung bei einem Gaswechsel von oxidierenden zu reduzierenden Bedingungen oder umgekehrt aufweist.

Als vorteilhafte Verhältnisse zwischen der elektronisch leitenden und der ionisch leitenden Phase in der Anode haben sich insbesondere solche zwischen 50/50 Vol.-% und 70/30 Vol.-% herausgestellt. Besonders vorteilhaft für die Kombination SYT und YSZ ist beispielsweise das Verhältnis 65/35 Vol.-%.

Die erfinderische Anode kann vorteilhaft einen Katalysator für die Reaktion mit dem Brenngas umfassen. Als Katalysator in dem erfindungsgemäßen Werkstoff sind insbesondere Ni, Co, Cu, Pd, Pt, Au oder Ru bzw. Legierungen dieser Metalle geeignet. Diese könne in Anteilen von maximal 10 Vol.-%, insbesondere in Anteilen von nicht mehr als 5 Vol.-% bezogen auf das Keramikgerüst des Werkstoffes vorliegen.

Vorteilhaft ist der Katalysator dabei auf der Oberfläche des porösen Keramikgerüstes innerhalb der Poren angeordnet. Aufgrund des geringen Anteils und der kleinen Partikelgröße, die regelmäßig zwischen 20 und 200 nm, insbesondere zwischen 50 und 150 nm liegt, und somit wesentlich kleiner als der mittlere Porendurchmesser des Keramikgerüstes ist, kann eine Schädigung des Gefüges bei Oxidation des Katalysators regelmäßig vermieden werden.

### Spezieller Beschreibungsteil

Nachfolgend wird die Erfindung anhand von Figuren und Ausführungsbeispielen näher erläutert, ohne dass dadurch eine Einschränkung der Erfindung auf diese Beispiele erfolgen soll.

Nachfolgend zeigen:
- Figur 1:: Schichtstruktur einer typischen planaren SOFC mit Ni/YSZ-Anodensubstrat mit: 1: Kathodenstromsammlerschicht, (KSSS), LSM, ~ 50 - 100 µm 2: Kathodenfunktionsschicht (KFS) LSM/YSZ, ~ 10 - 30 µm 3: Elektrolytschicht, YSZ, 5 - 10 µm 4: Anodenfunktionsschicht (AFS) Ni/YSZ, ~ 5 - 15 µm 5: Anodenstromsammlerschicht (ASSS) /Anodensubstrat/Ni/YSZ, 300 - 1500 µm
- Figur 2:: Änderung der elektr. Leitfähigkeit eines SYT/YSZ (65:35 Vol.-%)-Werkstoffes bei 800 °C und einem Gaswechsel zwischen feuchtem Ar/4% H₂ (A) und Luft (B)
- Figur 3:: Chemisches Ausdehnungsverhalten von SYT (mit 7 At.-% Y) bei 830 °C bei einem Gaswechsel zwischen feuchtem Ar/4 % H₂ (A) und Ar/20 % O₂ (C), Ar = Argon
- Figur 4:: Thermo-chemisches Ausdehnungsverhalten eines SYT/YSZ-Komposits (65:35 Vol.-%); Die Probe wurde zunächst auf 1060 °C aufgeheizt, dann auf 820 °C abgekühlt (in Ar), anschließend mehreren Redoxzyklen unterworfen (zwischen feuchtem Ar/4 % H₂ (A) und Ar/20 % O₂ (C) bei 820 °C), und schließlich auf Raumtemperatur abgekühlt
- Figur 5:: Thermo-chemisches Ausdehnungsverhalten eines SYT/CGO-Komposits (65:35 Vol.-%); Die Probe wurde zunächst auf 1060 °C aufgeheizt, dann auf 820 °C abgekühlt (in Ar), anschließend mehreren Redoxzyklen unterworfen (zwischen feuchtem Ar/4% H₂ (A) und Ar/20% O₂ (C) bei 820 °C), und schließlich auf Raumtemperatur abgekühlt.
- Figur 6:: Impedanzspektren von SYT/YSZ-Anoden mit und ohne 5 Vol.-% Ni, gemessen bei verschiedenen Temperaturen (850, 800 und 750 °C) mit feuchtem Ar/5 % H₂ als Brenngas. Der Ohmsche Widerstand wurde abgezogen, um ausschließlich den Polarisationswiderstand zu vergleichen.
- Figur 7:: Rasterelektronenmikroskopische Aufnahmen von SYT/YSZ-Anoden a) vor und b) nach Imprägnierung mit 5 Vol.-% Ni (im reduzierten Zustand). Die YSZ-Phase erscheint hellgrau, die SYT-Phase mittelgrau und die Poren schwarz. In b) sind zusätzlich kleine, runde Ni-Partikel (weiß) an den Wänden der Poren zu erkennen.
- Figur 8:: Verfahrensablauf zur Herstellung einer anodengestützten SOFC nach dem Stand der Technik und für die Realisierung eines redox-stabilen Anodensubstrates aus SYT/YSZ/Ni.

Erfindungsgemäß wird die Aufgabe der Erfindung gelöst durch ein Komposit umfassend ein erstes oxidisches, elektronisch leitendes Material (Phase) aus lanthanoid-substituiertem Strontiumtitanat (Sr₁₋ₓLnₓTiO₃ mit Ln = Y, Gd-Lu und 0,03< x < 0,2). Als bevorzugte Verbindung wird Sr₁₋ₓYₓTiO₃ mit 0,07 < x < 0,1 (SYT) angesehen, da andere und höhere Substitutionen zwar höhere Leitfähigkeiten ergeben können, aber bei einem Gaswechsel von oxidierenden zu reduzierenden Bedingungen oder umgekehrt auch zum Versagen in Form von Rissbildung führen können. Die elektrische Leitfähigkeit von SYT nach Reduktion bei hohen Temperaturen (> 1300 °C) beträgt 20 - 100 S/cm bei 800 °C in anodischer Atmosphäre. Obwohl SYT nach der Hochtemperaturreduktion eine anfängliche Leitfähigkeit von 80 S/cm besitzt, verringert sich diese nach einmaliger Oxidation auf etwa 20-30 S/cm, bleibt dann jedoch auch nach weiteren Gaswechseln konstant.

Als zweite keramische Komponente (Phase) mit vorwiegend ionischer Leitfähigkeit wird in dem Komposit Y₂O₃- oder Sc₂O₃-stabilisiertes Zirkoniumdioxid (YSZ oder ScSZ) eingesetzt. Ein Gemisch aus SYT und YSZ (65:35 Vol.-%) zeigt eine redox-stabile Leitfähigkeit von 10 S/cm unter anodischen Bedingungen (Figur 2). Dieser Wert ist zwar eine Größenordnung kleiner als für ein Ni/YSZ-Cermet, sollte aber keinen wesentlichen Beitrag zum Gesamtwiderstand einer Brennstoffzelle liefern. Als flächenspezifischer Widerstand ergibt sich mit dieser Materialkombination ein Wert von etwa 15 mΩ cm² für ein 1,5 mm dickes Anodensubstrat.

Wenn die Dicke des Substrates bei genügender mechanischer Festigkeit auf 0,5 oder gar 0,2 mm gesenkt werden kann, würde der flächenspezifische Widerstand lediglich 5 bzw. 2 mΩ cm² betragen.

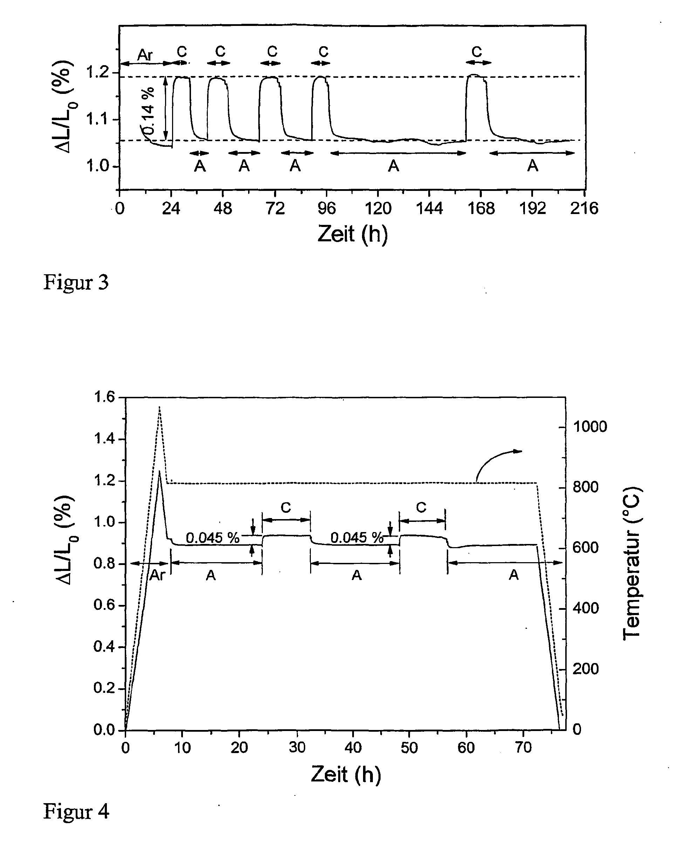

Es hat sich herausgestellt, dass die Reaktivität zwischen SYT und YSZ vernachlässigbar gering ist. Bei der Sinterung dieser Materialmischung bei 1400 °C für 5 h konnten keine Reaktionsprodukte durch Röntgenbeugung nachgewiesen werden. Der thermische Ausdehnungskoeffizient von SYT beträgt 11-12 x 10⁻⁶ K⁻¹, was dem Wert von YSZ (10,6 - 10,9 x 10⁻⁶ K⁻¹) sehr nahe kommt. Die Ausdehnung von SYT erfolgt im Gegensatz zu Cerdioxid oder anderen Oxiden mit Cr, Mn und anderen Übergangsmetallkationen nicht bei der Reduktion, sondern bei der Oxidation des Materials und beträgt bei 830 °C von Ar/4% H₂/3% H₂O (p(O₂)= 10⁻¹⁸ bar) nach Luft (bzw. Ar/20% O₂) 0,14 % (Figur 3). Wie oben dargelegt, würde dies bei einer 100 x 100 mm² Zelle einer Längenänderung von 140 µm betragen, was einer weiteren Verminderung bedarf. Durch Beimengung von YSZ, das keiner Längenänderung unterliegt, kann dieser Wert auf 0,045 % gesenkt werden (SYT/YSZ = 65:35 Vol.-%, Figur 4).

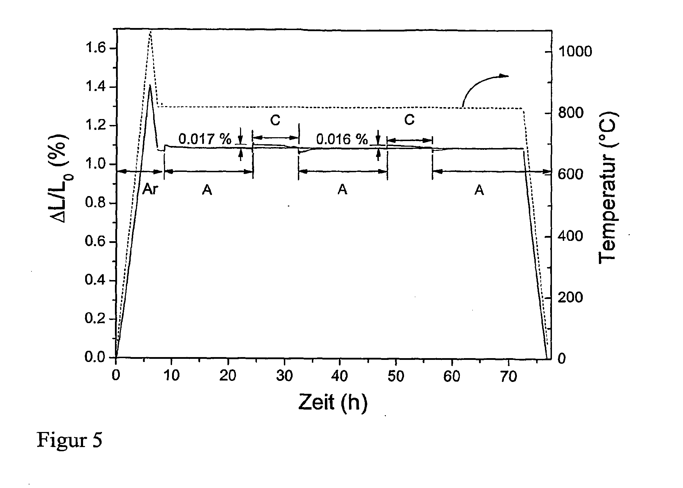

Eine weitere Reduzierung der resultierenden Längenänderung in der Anode kann erreicht werden, wenn ein Ionenleiter wie CGO verwendet wird, der ein gegenläufiges Verhalten zu dem des Elektronenleiters bei Gaswechsel aufweist. Dies würde im Prinzip zu einem Verbund führen, der keinerlei Längenänderung bei Gaswechsel aufweist. Wie in Figur 5 gezeigt wird, besitzt ein Verbund aus SYT und CGO (65:35 Vol.-%) in der Tat nahezu keine Längenänderung. Lediglich beim Zeitpunkt des Gaswechsels tritt eine Änderung von 0,016 - 0,017 % auf.

Trotz dieses sehr vorteilhaften Verhaltens können andere Nachteile während des Sinterns mit dem Elektrolyten erwartet werden, da es zu einer Reaktion mit YSZ kommen kann, die die Leitfähigkeit des Elektrolyten beeinträchtigt. Daher wird der Verbund SYT/CGO vorteilhaft nur für Brennstoffzellen mit CGO-Elektrolyten und Betriebstemperaturen < 600 °C eingesetzt werden.

Das hier beschriebene keramische Gerüst aus SYT/YSZ oder SYT/CGO kann direkt als Werkstoff für ein Anodensubstrat verwendet werden. Die elektrokatalytische Aktivität zur Oxidation des Brenngases ist jedoch bei Temperaturen von 600 - 800 °C in der Regel nur ungenügend. Durch Infiltration von geringen Mengen Ni als Katalysator in das SYT/YSZ-Gefüge wird die Katalyse sehr verbessert.

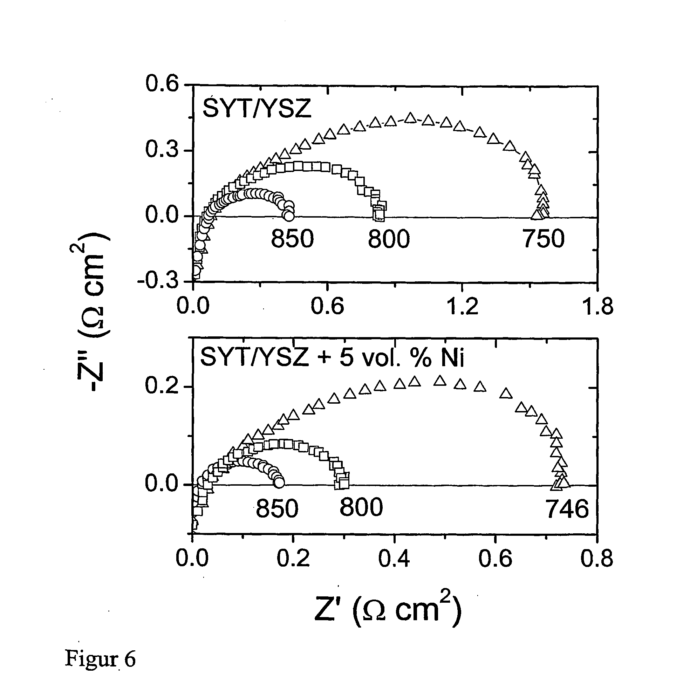

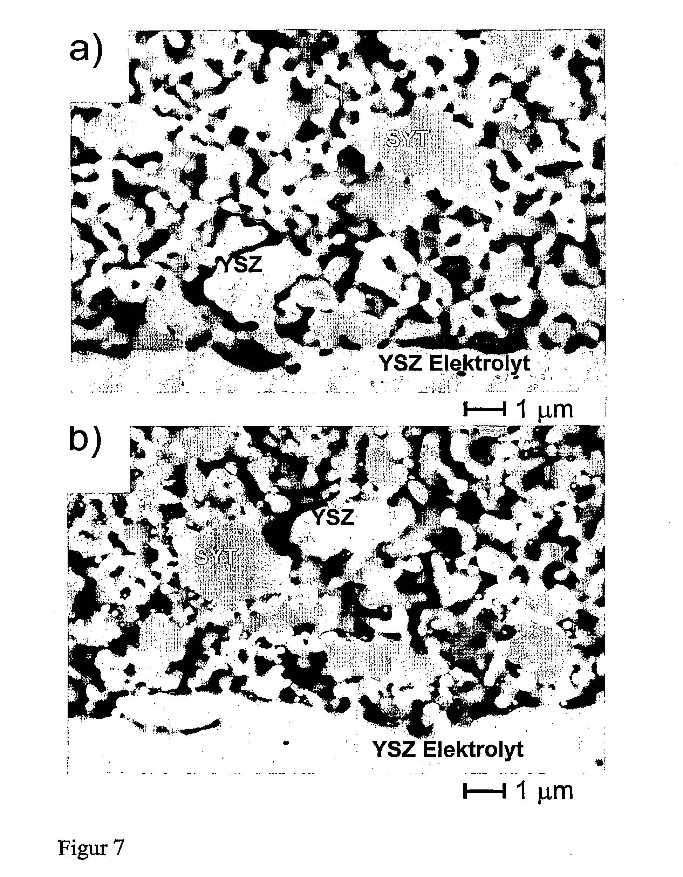

Wie in Figur 6 gezeigt, beträgt der Polarisationswiderstand einer Ni-freien SYT/YSZ-Anode 0,49 Ω cm² in befeuchtetem Ar/5% H₂ bei 850°C. Nach Infiltration von 5 Vol.-% Ni vermindert sich der Elektrodenpolarisationswiderstand auf 0,17 Ω cm² bei gleichen Versuchsbedingungen, was vergleichbar ist mit einer Ni/YSZ-Anode. In dieser Ausgestaltung wurden die Ni-Partikel als 50 - 150 nm große Körner gut im Gefüge verteilt und sind wesentlich kleiner als der mittlere Porendurchmesser von 0,5 - 1 µm (Figur 7). Dies bewirkt nicht nur eine große Zahl katalytisch aktiver Zentren, sondern durch das große Porenvolumen um sie herum wird eine Schädigung des Gefüges bei Oxidation vermieden. Als Alternative lassen sich auch Katalysatoren aus Co, Cu, Pd, Pt, Au oder Ru bzw. Legierungen dieser Metalle in das Keramikgerüst einbringen.

Mit einem SYT/YSZ-Anodensubstrat, das nach Ende aller Fertigungsschritte für eine SOFC mit wenigen Prozent Ni infiltriert wird und die Ni-Partikel nur etwa 1/10 der Größe des Porendurchmessers haben, konnte somit eine redox-stabile SOFC hergestellt werden.

Im Vergleich zu den Eigenschaften einer Anode nach dem Stand der Technik weist die erfindungsgemäße neue redox-stabile Anode aus beispielsweise SYT/YSZ/Ni folgende Eigenschaften auf:

| | |
|---|---|
| Elektrische Leitfähigkeit (bei 800°C): | 10-20 S/cm |
| Ionische Leitfähigkeit (bei 800°C): | ca. 0,001-0,005 S/cm |
| Thermischer Ausdehnungskoeffizient: | 11-12 x 10⁻⁶ K⁻¹ |

Ni-Anteil: 2 - 10 Vol.-% (statt zuvor 35-45 Vol.-%) bezogen auf alle Feststoffe.

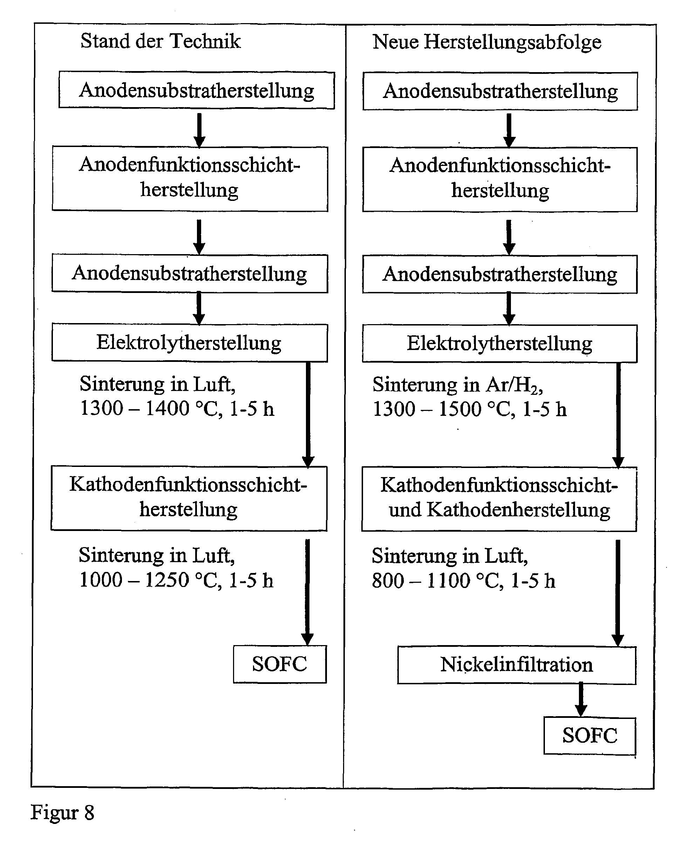

Zur Herstellung einer Brennstoffzelle gemäß der Figur 1 sind jedoch die Verfahrensschritte gegenüber dem Stand der Technik zu verändern, um eine elektrisch leitfähige Komponente in der Anode zu erhalten. Figur 8 zeigt die wesentlichen Änderungen in einem Fließschema.

Bei dem Verfahren zur Herstellung der erfindungsgemäßen Werkstoffmischung werden zunächst die Ausgangsmaterialien für die elektronisch leitende und die ionisch leitenden Phasen in Form von Pulvern mit einer mittleren Partikelgröße zwischen 1 und 5 µm gemischt und typischerweise mit einem organischen Bindersystem versetzt, um daraus beispielsweise durch Foliengießen oder Warm- oder Kaltpressen ein Substrat (Anodenstromsammlerschicht, Figur 1) herzustellen.

Die einfachste Herstellungsweise ist die direkte Beschichtung des Substrates mit einer Elektrolytschicht und einer anschließenden Sinterung. Die Funktion des Substrates als Anode wird in der abschließenden Infiltration mit Metallsalzen realisiert. Aus der bisherigen Erfahrung hat sich gezeigt, dass eine zusätzliche Anodenfunktionsschicht (AFS) mit feinkörnigeren Partikeln als im Anodensubstrat bessere Leistungsdichten für die Brennstoffzelle erbringt. Die bevorzugte mittlere Partikelgröße in der Anodenfunktionsschicht liegt dabei in der Regel bei 1/10 bezogen auf die jenige, die in dem Anodensubstrat vorliegt. Sie liegt für die Anodenfunktionsschicht insbesondere zwischen 0,1 und 0,7 µm. Daher ist auch für die erfindungsgemäße Brennstoffzelle eine AFS vorgesehen, bei der die YSZ und SYT-Partikel eine andere Korngröße besitzen als im Substrat. Die Verwendung einer Anodenfunktionsschicht hängt von der Schichtdicke des Substrates ab. Bei dünnen Substraten (< 0,5 mm) ist eine Anodenfunktionsschicht nicht notwendig und die Anode der Brennstoffzelle kann gemäß den Ansprüchen 1-5 gestaltet werden. Bei dicken Substraten (etwa 0,5 2 mm) sind größere Poren und Partikel (jeweils 1 - 5 µm) von Vorteil, um einen besseren Gasaustausch zu gewährleisten. Um eine vergleichbar gute Leistungsdichte zu erzielen und um die Elektrokatalyse zu verbessern, muss dann jedoch eine AFS in einer Dicke von 5 - 50 µm noch auf das Substrat aufgebracht werden.

Um eine Zelle möglichst ökonomisch aufzubauen, wird eine Elektrolytschicht bzw. eine Anodenfunktionsschicht direkt auf das Anodensubstrat aufgebracht, beispielsweise durch Siebdruck, und dieser Verbund wird dann bei Temperaturen von 1300 - 1500 °C gesintert. Beim Stand der Technik wird üblicherweise an Luft gesintert, bei der erfindungsgemäßen Anordnung wird zunächst bis etwa 900 oder 1000 °C an Luft aufgeheizt, um die organischen Hilfsstoffe auszubrennen, danach wird die Atmosphäre auf Ar/H₂ gewechselt und die Sinterung bei 1300 -1500 °C für 1 - 5 Stunden fortgeführt, um die elektronisch leitende Phase im Anodensubstrat zu erzeugen.

Für den Fall, dass der Schichtverbund nicht ausreichend gut in seinem Sinterverhalten ausgestaltet ist, kann das Ausbrennen der organischen Hilfsstoffe und ein Vorsintern des Anodensubstrates vor dem Aufbringen der Anodenfunktions- und Elektrolytschicht erfolgen. Dies bedarf dann zwar einen zusätzlichen Sinterprozess, hat aber ggf. den Vorteil, dass die reduzierende Sinterung in Ar/H₂ in einem vollständigen Temperaturzyklus erfolgen kann, sofern anlagenbedingt ein Wechsel der Atmosphäre während des Temperaturprogramms nicht möglich sein sollte.

Nachdem der Anodenstromsammlerschicht (ASSS) Anodenfunktionsschicht (AFS)-Elektrolytschicht-Verbund hergestellt ist, kann die Kathodenfunktionsschicht (KFS) und Kathodenstromsammlerschicht (KSSS) aufgebracht werden, die zusammen in Luft bei 800 - 1000 °C gesintert werden. Dadurch reduziert sich die elektrische Leitfähigkeit der Anodenstromsammlerschicht, wird jedoch während des Brennstoffzellenbetriebs wieder zurückgebildet.

Nach erfolgter Kathodensinterung wird abschließend der Katalysator (Ni, Co, Cu oder Edelmetall) gemäß der Ansprüche 6-11 in Form einer verdünnten, wasserlöslichen Salzlösung in das poröse Anodensubstrat infiltriert. Das Salz sollte die Eigenschaft haben, dass es sich beim ersten Aufheizen der Zelle oder des Zellenstapels zersetzt und rückstandsfrei ausbrennt. Als mögliche Salze sind Nitrate, Karbonate, Zitrate oder andere Salze organischer Säuren zu verwenden, bei manchen Edelmetallen können auch Chloride oder komplexe Salze eingesetzt werden. Die Konzentration der Salzlösung ist so hoch zu wählen, dass die Beladung von mindestens 1 - 2 Gewichtsprozenten pro Infiltrationsprozess erreicht wird, damit möglichst nicht mehr als 3 - 5 Infiltrations- und Trocknungsschritte notwendig werden. Üblicherweise kann dies mit einer gesättigten Nitratsalzlösung erreicht werden.

Diese Abfolge der Herstellung hat gegenüber dem Stand der Technik den weiteren Vorteil, dass in dem gesamten Herstellungsprozess kein gesundheitsschädliches, pulverförmiges Nickeloxid verwendet wird und die Mengen an zu infiltrierenden Metallsalzen wesentlich geringer sind, als die normalerweise zu verwendende Menge an Nickeloxid.

## Patentansprüche

1. Verfahren zur Herstellung einer Anode mit einem Anodensubstrat und/oder einer Anodenfunktionsschicht, welche ein poröses keramisches Gerüst mit einer ersten, überwiegend Elektronen leitenden Phase mit der allgemeinen Summenformel Sr₁-ₓLnₓTiO₃ sowie mit einer zweiten, überwiegend Ionen leitenden Phase Komponente aus Yttrium oder Scandium stabilisiertem Zirkoniumdioxid (YSZ oder ScSZ) oder einem lanthanoid-substitierten Ceroxid umfasst, mit den Schritten
- ein Ausgangspulver der ersten, überwiegend Elektronen leitenden Phase mit der allgemeinen Summenformel Sr₁₋ₓLnₓTiO₃ mit Ln = Y, Gd bis Lu und 0,03 < x < 0,2 und ein Ausgangpulver der zweiten, überwiegend Ionen leitenden Phase Komponente aus Yttrium oder Scandium stabilisiertem Zirkoniumdioxid (YSZ oder ScSZ) oder einem lanthanoid-substitierten Ceroxid werden gemischt,
- diese Mischung wird mit einem organischen Binder versetzt,
- die Sinterung des keramischen Gerüstes findet in einer Ar/H₂-Atmosphäre bei Temperaturen oberhalb von 1300 °C statt, wodurch die überwiegend Elektronen leitenden Phase in reduzierter Form vorliegt.

2. Verfahren zur Herstellung einer Anode nach Anspruch 1, bei dem das Anodensubstrat und/oder die Anodenfunktionsschicht durch Foliengießen oder Warm- oder Kaltpressen hergestellt werden.

3. Verfahren zur Herstellung einer Anode nach einem der Ansprüche 1 bis 2, bei dem das Verhältnis von erster Phase zu zweiter Phase im Bereich von 80:20 Vol.-%. bis 50:50 Vol.-%, insbesondere von 70:30 Vol.-%. bis 60:40 Vol.-% eingestellt wird.

4. Verfahren zur Herstellung einer Anode nach einem der Ansprüche 1 bis 3, bei dem erst nach dem Sintern des keramischen Gerüstes ein Katalysator in dieses infiltriert wird.

5. Anode einer Hochtemperatur-Brennstoffzelle mit einem Anodensubstrat und/oder einer Anodenfunktionsschicht, wobei diese ein poröses keramisches Gerüst mit einer ersten, überwiegend Elektronen leitenden Phase mit der allgemeinen Summenformel Sr₁₋ₓLnₓTiO₃ mit Ln = Y, Gd bis Lu und 0,03 < x < 0,2, sowie mit einer zweiten, überwiegend Ionen leitenden Phase Komponente aus Yttrium oder Scandium stabilisiertem Zirkoniumdioxid (YSZ oder ScSZ) oder einem lanthanoid-substitierten Ceroxid umfasst, **dadurch gekennzeichnet,**
- **dass** die überwiegend Elektronen leitenden Phase in reduzierter Form vorliegt.

6. Anode nach Anspruch 5, bei dem das volumenmäßige Verhältnis von erster Phase zu zweiter Phase im Bereich von 80:20 bis 50:50, insbesondere von 70:30 bis 60:40 vorliegt.

7. Anode nach einem der Ansprüche 5 bis 6, mit einer Porosität von 15 bis 50 Vol.-%.

8. Anode nach einem der Ansprüche 5 bis 7, bei dem der mittlere Porendurchmesser zwischen 0,2 und 5 µm, insbesondere zwischen 0,5 und 1 beträgt.

9. Anode nach einem der Ansprüche 5 bis 8, mit Sr₁₋ₓYₓTiO₃ und 0,07 < x < 0,1 als erster, überwiegend Elektronen leitenden Phase und einer elektrischen Leitfähigkeit von über 20 S/cm bei T = 800 °C.

10. Anode nach einem der Ansprüche 5 bis 9, umfassend zusätzlich einen Katalysator in einer Menge von max. 15 % der Gesamtmasse, insbesondere in einer Menge von 2 bis 10 % der Gesamtmasse.

11. Anode nach Anspruch 10, bei dem der Katalysator auf der Oberfläche der Poren des keramischen Gerüstes angeordnet ist.

12. Anode nach Anspruch 11 bis 12, bei dem der Katalysator in Form von Teilchen vorliegt, und das Verhältnis von mittlerem Durchmesser der Katalysatorteilchen zu mittlerem Porendurchmesser des keramischen Gerüstes ≤ 1 : 10 beträgt.

13. Anode nach einem der Ansprüche 11 bis 13, bei dem der Katalysator in Form von Katalysatorteilchen mit einem mittleren Durchmesser von 20 bis 500 nm, insbesondere mit einem mittleren Durchmesser von 50 bis 150 nm vorliegt.

14. Anode nach einem der Ansprüche 11 bis 13, mit Ni, Co, Au, Pd, Pt oder Ru als Katalysator.

15. Anode nach einem der Ansprüche 11 bis 13, mit Cu als Katalysator.

16. Anode nach einem der Ansprüche 5 bis 15, mit einem Anodensubstrat und einer Anodenfunktionsschicht, jeweils umfassend ein poröses keramisches Gerüst mit einer ersten, überwiegend Elektronen leitenden Phase mit der allgemeinen Summenformel Sr₁₋ₓLnₓTiO₃ mit Ln = Y, Gd bis Lu und 0,03 < x < 0,2 sowie mit einer zweiten, überwiegend Ionen leitenden Phase Komponente aus Yttrium oder Scandium stabilisiertem Zirkoniumdioxid (YSZ oder ScSZ) oder einem lanthanoid-substitierten Ceroxid, wobei die mittlere Partikelgröße der Phasen in dem Anodensubstrat kleiner ist, als die der Anodenfunktionsschicht, und wobei die Anodenfunktionsschicht zusätzlicher Katalysator in einer Menge von max. 15 % der Gesamtmasse der Anodenfunktionsschicht aufweist.

## Claims

1. Process for the manufacture of an anode with an anodic substrate and/or anodic function layer comprising a porous ceramic framework with a first, predominantly electron-conducting, phase with the general empirical formula Sr1-xLnxTi03 and with a second, predominantly ion-conducting, phase component consisting of yttrium- or scandium-stabilized zirconium dioxide (YSZ or ScSZ) or a lanthanoid-substituted cerium oxide, with the following steps
an initial powder of the first, predominantly electron-conducting, phase with the general empirical formula Sr1-xLnxTiO3 with Ln = Y, Gd to Lu and 0.03 < x < 0.2 and an initial powder of the second, predominantly ion-conducting phase component consisting of yttrium- or scandium-stabilized zirconium dioxide (YSZ or ScSZ) or a lanthanoid-substituted cerium oxide are mixed,
an organic binder is added to this mixture,
sintering of the ceramic framework is conducted in an argon/hydrogen atmosphere at temperatures above 1300°C, reducing the predominantly electron-conducting phase to a deoxidized form.

2. Process for the manufacture of an anode according to Claim 1 wherein the anodic substrate and/or anodic function layer are produced by solution casting or hot or cold pressing.

3. Process for the manufacture of an anode according to either of Claims 1 and 2 wherein the ratio of the first phase to the second phase is set in the range of from 80:20 % by volume to 50:50 % by volume, in particular 70:30 % by volume to 60:40 % by volume.

4. Process for the manufacture of an anode according to any one of Claims 1 to 3 wherein a catalyst is infiltrated into the ceramic framework, but only after the latter has been sintered.

5. Anode of a high-temperature fuel cell with an anodic substrate and/or anodic function layer comprising a porous ceramic framework with a first, predominantly electron-conducting, phase with the general empirical formula Sr1-xLnxTi03 with Ln = Y, Gd to Lu and 0.03 < x < 0.2 and with a second, predominantly ion-conducting phase component consisting of yttrium- or scandium-stabilized zirconium dioxide (YSZ or ScSZ) or a lanthanoid-substituted cerium oxide, **characterized in that**
the predominantly electron-conducting phase is in deoxidized form.

6. Anode according to Claim 5 wherein the ratio by volume of the first phase to the second phase is in the range of from 80:20 to 50:50, in particular 70:30 to 60:40.

7. Anode according to either of Claims 5 and 6 with a porosity of 15 to 50 % by volume.

8. Anode according to any one of Claims 5 to 7 wherein the average pore diameter is between 0.2 and 5 µm, in particular between 0.5 and 1 µm.

9. Anode according to any one of Claims 5 to 8 with Sr1-xYxTiO3 and 0.07 < x < 0.1 as the first, predominantly electron-conducting, phase and with an electrical conductivity of over 20 S/cm at T = 800°C.

10. Anode according to any one of Claims 5 to 9, additionally comprising a catalyst in a maximum proportion of 15% of the total mass, in particular in a proportion of 2 to 10 % of the total mass.

11. Anode according to Claim 10 wherein the catalyst is disposed on the surface of the pores of the ceramic framework.

12. Anode according to Claim 11 or Claim 12 wherein the catalyst is in the form of particles and the ratio of the average diameter of the catalyst particles to the average pore diameter of the ceramic framework is ≤ 1:10.

13. Anode according to any one of Claims 11 to 13 wherein the catalyst is in the form of catalyst particles with an average diameter of 20 to 500 nm, in particular with an average diameter of 50 to 150 nm.

14. Anode according to any one of Claims 11 to 13 with nickel, cobalt, gold, palladium, platinum or ruthenium as the catalyst.

15. Anode according to any one of Claims 11 to 13 with copper as the catalyst.

16. Anode according to any one of Claims 5 to 15 with an anodic substrate and an anodic function layer each comprising a porous ceramic framework with a first, predominantly electron-conducting, phase with the general empirical formula Sr1-xLnxTiO3 with Ln = Y, Gd to Lu and 0.03 < x < 0.2 and with a second, predominantly ion-conducting phase component consisting of yttrium- or scandium-stabilized zirconium dioxide (YSZ or ScSZ) or a lanthanoid-substituted cerium oxide, wherein the average particle size of the phases in the anodic substrate is smaller than that of the anodic function layer and wherein the anodic function layer comprises an additional catalyst in a maximum proportion of 15% of the total mass of the anodic function layer.

## Revendications

1. Procédé de production d'une anode comportant un substrat d'anode et/ou une couche fonctionnelle d'anode, comprenant une structure céramique poreuse dotée d'une première phase conductrice principalement d'électrons, de formule élémentaire générale Sr₁₋ₓ-LnₓTiO₃ et d'une deuxième phase conductrice principalement d'ions, de dioxyde de zirconium stabilisé par des composants d'yttrium ou de scandium (YSZ ou ScSZ) ou d'un céroxyde substitué par un lanthanoïde, comprenant les étapes de :
- mélange d'une poudre de départ de la première phase conductrice principalement d'électrons de formule élémentaire générale Sr₁₋ₓLnₓTiO₃ où Ln = Y, Gd à Lu et 0,03 < x < 0,2 et une poudre de départ de la deuxième phase conductrice principalement d'ions, de dioxyde de zirconium stabilisé avec les composants d'yttrium ou de scandium (YSZ ou ScSZ) ou d'un céroxyde substitué par un lanthanoïde,
- ajout de ce mélange à un liant organique,
- frittage de la structure céramique dans une atmosphère de Ar/H₂ à des températures supérieures à 1300° C, la phase conductrice principalement d'électrons se présentant sous forme réduite.

2. Procédé de production d'une anode selon la revendication 1, dans lequel le substrat d'anode et/ou la couche fonctionnelle d'anode est produit(e) par coulage en feuille ou compression à chaud ou à froid.

3. Procédé de production d'une anode selon l'une des revendications 1 à 2, dans lequel le rapport de la première phase à la deuxième phase est ajusté dans une plage de 80:20 % en volume à 50:50 % en volume, en particulier de 70:30 % en volume à 60:40 % en volume.

4. Procédé de production d'une anode selon l'une des revendications 1 à 3, dans lequel un catalyseur est infiltré dans celui-ci seulement après le frittage de la structure céramique.

5. Anode d'une pile à combustible à haute température comportant un substrat d'anode et/ou une couche fonctionnelle d'anode, celle-ci comprenant une structure en céramique poreuse comportant une première phase conductrice principalement d'électrons de formule élémentaire générale Sr₁₋ₓLnₓTiO₃ où Ln = Y, Gd à Lu et 0,03 < x < 0,2 et une deuxième phase conductrice principalement d'ions, de dioxyde de zirconium stabilisé par les composants d'yttrium ou de scandium (YSZ ou ScSZ) ou d'un céroxyde substitué par un lanthanoïde, **caractérisé en ce que**
- la phase conductrice principalement d'électrons se présente sous forme réduite.

6. Anode selon la revendication 5, dans laquelle le rapport en volume de la première phase à la deuxième phase se situe dans une plage de 80:20 à 50:50, en particulier de 70:30 à 60:40.

7. Anode selon l'une des revendications 5 à 6, présentant une porosité de 15 à 50 % en volume.

8. Anode selon l'une des revendications 5 à 7, dans laquelle le diamètre moyen des pores se situe entre 0,2 et 5 µm, en particulier entre 0,5 et 1.

9. Anode selon l'une des revendications 5 à 8, comportant Sr₁₋ₓYₓTiO₃ et 0,07 < x < 0,1 en tant que première phase conductrice principalement d'électrons et présentant une conductibilité électrique supérieure à 20 S/cm à une T = 800° C.

10. Anode selon l'une des revendications 5 à 9, comprenant en outre un catalyseur en une quantité maximale de 15 % de la masse totale, en particulier en une quantité de 2 à 10 % de la masse totale.

11. Anode selon la revendication 10, dans laquelle le catalyseur est disposé sur la surface des pores de la structure céramique.

12. Anode selon la revendication 11 à 12, dans laquelle le catalyseur se présente sous forme de particules et le rapport du diamètre moyen des particules de catalyseur au diamètre moyen des pores de la structure céramique est ≤ 1:10.

13. Anode selon l'une des revendications 11 à 13, dans laquelle le catalyseur se présente sous la forme de particules de catalyseur présentant un diamètre moyen de 20 à 500 nm, en particulier un diamètre moyen de 50 à 150 nm.

14. Anode selon l'une des revendications 11 à 13, comportant du Ni, Co, Au, Pd, Pt ou Ru comme catalyseur.

15. Anode selon l'une des revendications 11 à 13, avec du Cu comme catalyseur.

16. Anode selon l'une des revendications 5 à 15, comportant un substrat d'anode et/ou une couche fonctionnelle d'anode, comprenant respectivement une structure en céramique poreuse comportant une première phase conductrice principalement d'électrons de formule élémentaire générale Sr₁₋ₓLnₓTiO₃ où Ln = Y, Gd à Lu et 0,03 < x < 0,2 et une deuxième phase conductrice principalement d'ions, de dioxyde de zirconium stabilisé par les composants d'yttrium ou de scandium (YSZ ou ScSZ) ou d'un céroxyde substitué par un lanthanoïde, **caractérisée en ce que** la taille moyenne de particules des phases dans le substrat d'anode est inférieure à celle de la couche fonctionnelle d'anode et dans laquelle la couche fonctionnelle d'anode présente en outre un catalyseur en une quantité maximale de 15 % de la masse totale de la couche fonctionnelle d'anode.
